# NOUVEAU FASCICULE DE BREVET EUROPEEN

(11) **EP 0 675 023 B2**
(45) Date de publication et mention de la décision concernant l'opposition: **07.12.2005**
(45) Mention de la délivrance du brevet: 02.09.1998
(21) Numéro de dépôt: 95104517.8
(22) Date de dépôt: 28.03.1995
(51) Int. Cl.: B60R 16/02

(54) **Support de commutateurs pour colonne de direction d'un véhicule automobile**
Kraftfahrzeuglenksäulen-Schaltergehäuse
Switches casing for automotive vehicle steering shaft

(30) Priorité: 31.03.1994 FR 9403817
(43) Date de publication de la demande: 04.10.1995
(73) Titulaire: VALEO ELECTRONIQUE, 94042 Creteil Cédex (FR)
(72) Inventeur: Lagier, Daniel, F-92000 Nanterre (FR)
(74) Mandataire: de la Bigne, Guillaume Michel Marie

(56) Documents cités:
- EP-A- 0 505 114
- DE-A- 4 019 006
- DE-A- 4 121 284
- DE-U- 9 300 909
- US-A- 4 789 342

## Description

La présente invention a pour objet un support de commutateurs associé à la colonne de direction d'un véhicule automobile, du genre comportant une partie centrale pour liaison à ladite colonne de direction et montage d'un contacteur tournant comportant deux parties coaxiales montées mobiles l'une par rapport à l'autre à l'encontre de moyens souples de liaison électrique, à savoir, une partie fixe liée à ladite partie centrale et une partie mobile associée au volant de direction du véhicule.

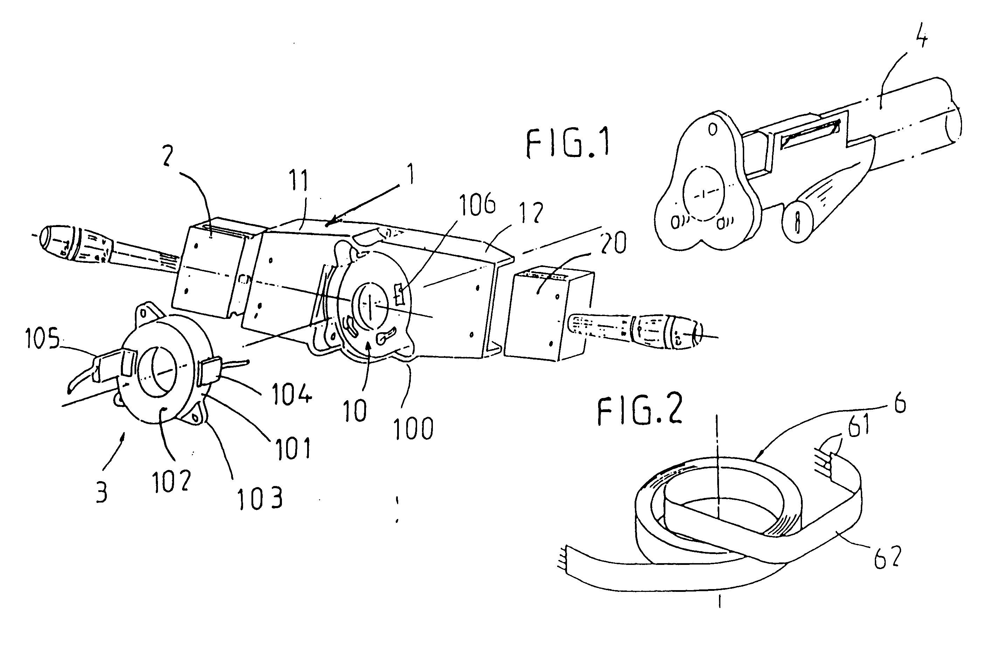

Ainsi qu'on le sait (figure 1) un support de commutateurs 1 comporte usuellement une partie centrale 10 et deux ailes latérales 11,12 pour montage de commutateurs à manette 2,20.

Les commutateurs 2,20 sont classiquement les commutateurs de commande de l'éclairage et de l'essuyage du véhicule.

La partie centrale 10 du support 1 présente des trous de passage pour montage, usuellement à l'aide de vis, sur l'extrémité de la colonne de direction 4, dotée à cet effet d'une platine avec des trous filetés.

La partie centrale 10 sert également ici de réceptacle au contacteur tournant 3, comportant une partie fixe 101, ici en forme de boîtier, et une partie mobile 102.

Les moyens souples de liaison électrique 6 sont enroulés en spirale, à la manière d'un ressort de montre, entre cesdites parties 101 et 102.

Ces moyens 6 permettent une liaison électrique entre un ou des premiers dispositifs liés au volant (non visible) du véhicule et un ou des seconds dispositifs liés à la colonne 4 ou au châssis du véhicule.

Les premiers dispositifs peuvent consister par exemple en des contacteurs électriques, tels que l'avertisseur sonore, ou en un dispositif de sécurité à coussin gonflable dénommé "Air Bag" qui se gonfle en cas d'accident pour protéger le conducteur.

Ces moyens souples 6 consistent, par exemple, en un ruban avec des conducteurs électriques 61 placé sur un premier film polyester recouvert d'un isolant dit "Coverlay", le plus souvent un autre film polyester collé sur le premier film.

En variante, comme décrit dans le document FR-A-2703522 publié le 07.10.94, le ruban peut être fractionné en deux tronçons avec une pièce de couplage, les tronçons consistant chacun en une bande électriquement conductrice enroulée en spirale.

Dans tous les cas, il est possible d'effectuer 1,75 à 3,5 tours de volant dans un sens et dans l'autre.

Ce contacteur 3, fabriqué par un équipementier, est livré au constructeur automobile pour être monté dans la partie centrale 10 du support 1.

Pour ce faire sa partie fixe 101 comporte des oreilles 103 reçues dans des logements complémentaires 100 de la partie centrale 10.

La fixation a lieu à l'aide de vis traversant les oreilles 103 pour venir en prise avec le fond des logements 100.

En outre cette partie fixe 101 présente une partie rigide 104 saillante axialement et pénétrant de manière complémentaire dans un trou 106 pratiqué dans la partie centrale 10.

La partie mobile 102 présente également une partie rigide 105 saillante axialement pour son entraînement en rotation par le volant du véhicule.

Les parties 104 et 105 appartiennent usuellement à des connecteurs.

Il en résulte que ladite partie centrale 10 est relativement compliquée puisqu'elle présente des passages 100 et qu'elle doit respecter certaines tolérances de fabrication pour réception du contacteur 3.

Il faut ainsi donc respecter certains jeux de montage au niveau des passages 100 et du trou 106.

En outre, la partie centrale 10 est trouée pour réception des vis associées aux oreilles 103. De plus, les passages 100 augmentent l'encombrement du support 1 et le constructeur a à sa charge de fixer la partie fixe 101 du contacteur 3.

Le plus souvent ces passages 100 sont évidés à leur partie basse pour réduire l'encombrement au détriment de la robustesse de la partie centrale 10.

Pour pallier ces inconvénients de manière simple et économique, dans le document DE-A-9 300 909, conforme au préambule de la revendication 1, la partie centrale dudit support forme la partie fixe du contacteur tournant.

Grâce à cette disposition le support de commutateurs devient la partie fixe du contacteur tournant, en sorte qu'on réalise un gain en nombre de pièces, en poids et en temps de montage. En outre on supprime des parois et des jeux de montage.

En effet, le boîtier du contacteur tournant est supprimé ainsi que ses oreilles de fixation. Il n'est donc plus nécessaire de stocker des vis de fixation.

En outre la largeur du support est fortement diminuée puisque ce support est dépourvu de passage pour les oreilles de l'art antérieur.

Le support est également plus simple et plus rigide car il ne comporte plus d'évidement pour la fixation de la partie fixe du contacteur.

De plus, on supprime des parois et des jeux de montage, puisque la partie centrale forme la partie fixe du contacteur tournant. En pratique les moyens souples de liaison électrique sont confinés à l'intérieur d'une cavité définie par un boîtier, que présente la partie centrale, et par le volant conformé en conséquence.

Il peut être souhaitable de ne pas modifier le volant et de simplifier encore le montage du contacteur tournant.

La présente invention a pour objet de répondre, de manière simple et économique, à ces souhaits.

Conformément à l'invention ce problème est résolu par la partie caractérisante de la revendication 1.

Grâce à l'invention le montage du contacteur tournant peut se faire par simple enfilage axial.

Avantageusement la partie centrale peut comporter une cheminée saillante axialement pour recevoir l'extrémité de connexion des moyens souples.

Grâce à ces dispositions le montage du contacteur tournant peut se faire par simple enfilage axial avec clipsage des différents éléments, en sorte que les temps de montage sont encore réduits.

La description qui va suivre illustre l'invention en regard des dessins annexés dans lesquels :
- la figure 1 est une vue en perspective d'un support de commutateurs, d'une partie de la colonne de direction, d'un contacteur tournant et d'une commande supplémentaire selon l'art antérieur ;
- la figure 2 est une vue schématique des moyens de transmission de signaux ;
- la figure 3 est une vue en coupe axiale d'un support selon l'invention ;
- la figure 4 est une vue selon la flèche 4 de la figure 3.

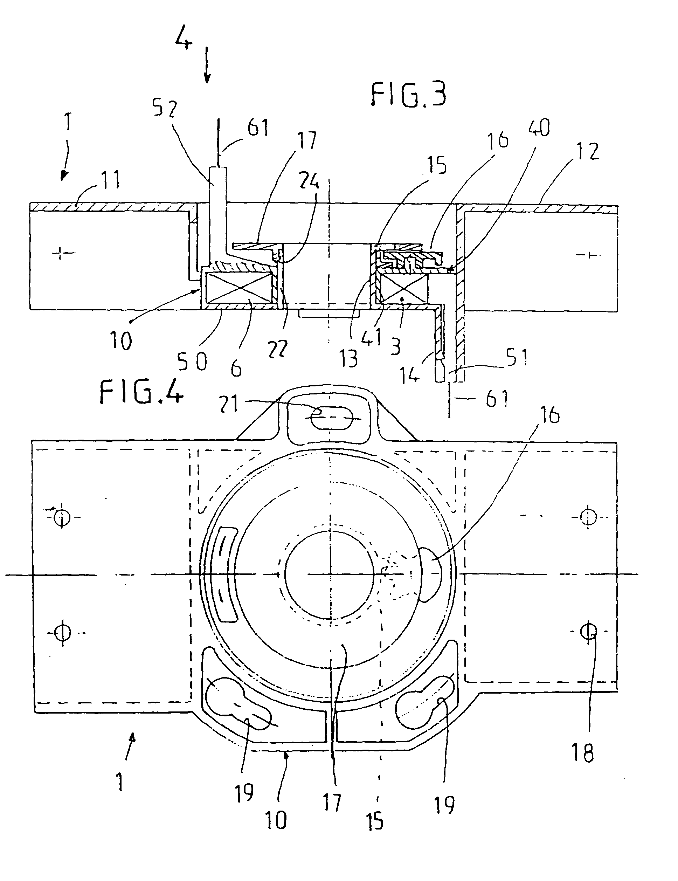

Les figures 3 et 4 illustrent un support de commutateurs 1 associé à la colonne de direction (visible à la figure 1) d'un véhicule automobile. Ce commutateur comporte une partie centrale 10 pour liaison à ladite colonne de direction et montage d'un contacteur tournant 3 comportant deux parties coaxiales 10,40 montées mobiles l'une par rapport à l'autre à l'encontre de moyens souples de liaison électrique 6, à savoir, une partie fixe 10, en forme de boîtier, liée à ladite partie centrale et une partie mobile 40 associée au volant de direction (non visible) du véhicule.

Le support 1 est en matière moulable, ici en matière plastique renforcée avantageusement par des fibres pour lui donner la rigidité voulue.

Ce support 1 comporte également deux ailes 11,12, ici à section en forme de U, pour montage notamment des commutateurs 2,20 de la figure 1.

A cet effet les ailes présentent des trous 18 (figure 4) pour montage des organes de fixation des commutateurs 2,20, dont les manettes de commande sont à la disposition du conducteur de part et d'autre du volant.

La partie centrale 10 dudit support 1 forme la partie fixe du contacteur tournant 3. Ici la partie centrale 10 est creuse et forme le boîtier du contacteur 3, en étant conformée pour recevoir lesdits moyens souples.

Plus précisément, le fond 50 de la partie centrale creuse 10 appartient à un boîtier annulaire avec un fond et un rebord périphérique d'orientation axiale (figure 3). Centralement le boîtier présente suivant une caractéristique de l'invention un manchon 13 et est adapté par son fond à venir en appui sur la platine de la colonne de direction 4.

Les moyens souples 6 sont confinés à l'intérieur d'une cavité définie par ledit boîtier et une pièce 41 appartenant à la partie mobile 40 du contacteur 3. Cette pièce 41 est distincte du volant du véhicule (non visible).

Cette pièce 41, de forme annulaire, a en section une forme d'équerre et comporte suivant une caractéristique de l'invention une partie d'orientation axiale montée tourillonnante sur le manchon central 13 qui permet le passage de l'arbre de direction relié au volant et traversant la colonne de direction 4.

La partie centrale 10 présente par ailleurs une cheminée 14 d'orientation axiale faisant saillie vers l'extérieur. Cette cheminée forme à son extrémité un épaulement pour montage par encliquetage d'une partie rigide crantée 51 surmoulée sur l'une des extrémités desdits moyens souples 6, ici en forme de ruban à fils conducteurs 61 et isolant électrique 62.

L'autre extrémité du ruban est surmoulée sur une partie rigide 52 d'orientation axiale faisant saillie en direction opposée par rapport à la partie 51.

Ici la partie 52 fait saillie en direction du volant du véhicule (non visible) tandis que la partie 51 fait saillie en direction de la colonne de direction 4.

Par ailleurs la pièce 41 porte une roue dentée 16 et un couvercle 17 vient recouvrir partiellement la roue 16. Ce couvercle recouvre également partiellement la pièce 41 et est fixé par encliquetage sur l'extrémité libre du manchon 13.

Pour ce faire, le couvercle comporte au moins une patte crantée 24 venant en prise avec le contour d'une fente 22 associée, pratiquée axialement dans le moyeu 13.

Le couvercle 17 présente une partie 15 conformée pour présenter un ergot. Cet ergot est destiné à coopérer avec la roue dentée 16, comme décrit dans le document FR-A-2707434 déposé le 6 Juillet 1993 et publié le 13 janvier 1995.

Pour mémoire on rappellera que la roue 16 comporte des dents de contact propres à être entraînées par l'ergot de la partie 15.

Ainsi il est créer un dispositif compteur de tours, ainsi que de blocage permettant de retrouver aisément en toute sécurité, de manière précise et rapidement, la position moyenne du contacteur tournant.

Pour ce faire la roue 16 est étagée et présente une partie dentée inférieure propre à pénétrer dans une encoche de dégagement, que présente la partie étagée 15 en-dessous de son ergot.

Par ailleurs la partie centrale comporte des trous 19,21 pour sa fixation à la colonne de direction 4, lesdits trous permettant le passage d'organes de fixation tels que des vis venant se fixer dans les trous filetés de la platine de la colonne 4 (figure 1).

Ces trous sont implantés sur une circonférence de diamètre supérieur à celle du fond 50.

Ainsi qu'on l'aura compris, on obtient un support 1 rigide, plus robuste et moins encombrant que celui de la figure 1, puisqu'il est dépourvu de trous et de passages 100 pour la fixation des oreilles 103 de la figure 1.

On obtient également un gain en poids et en nombre de pièces, avec suppression des jeux de montage.

En outre le montage du contacteur 3 est simple en étant réalisé par enfilage axial.

Dans un premier temps, on enfile la partie 51 du ruban 3 par encliquetage dans la cheminée 14. Ce ruban étant simultanément avec la partie mobile 40 et sa pièce 41 enfilé dans le boîtier 50 (sur le manchon 13), la pièce 41 portant la roue 16. Ensuite on vient monter en final le couvercle 17,15 par encliquetage.

Avantageusement la pièce 41, le couvercle 17 avec sa partie 15 et la roue dentée 16 sont en matière plastique.

On appréciera que les temps de montage sont réduits et que celui-ci se fait par simple encliquetage sans avoir à procéder à un quelconque vissage.

Bien entendu la présente invention n'est pas limitée à l'exemple de réalisation décrit. En particulier lesdits moyens souples peuvent consister en une bande de cuivre enroulée en spirale.

Les parties de connexion 51,52 peuvent être semi-rigides. La partie fixe du contacteur 3 peut être plate. Dans tous les cas les moyens souples 6 sont en contact avec la partie fixe.

Enfin le support 1 peut être d'un seul tenant avec la colonne de direction en étant ainsi lié ainsi à celle-ci.

## Revendications

1. Support de commutateurs (1) associé à la colonne de direction (4) d'un véhicule automobile du genre comportant une partie centrale (10) pour liaison à ladite colonne de direction et montage d'un contacteur tournant (3),
ce contacteur (3) comportant deux parties coaxiales (10, 40) montées mobiles l'une par rapport à l'autre à l'encontre de moyens souples de liaison électrique (6), à savoir :
a) une partie fixe (10), constituée par la partie centrale, formant un boîtier annulaire comportant
- un fond (50),
- un rebord périphérique d'orientation axiale, et
- un manchon central (13),
b) une partie mobile (40), associée au volant de direction du véhicule, comportant une pièce annulaire (41),
le boîtier et la pièce (41) définissant une cavité à l'intérieur de laquelle les moyens souples de liaison électrique (6) sont confinés,
**caractérisé en ce que** la pièce (41) est munie d'une partie d'orientation axiale montée tourillonnante sur le manchon (13) formant moyeu, et **en ce que** le support comprend un couvercle (17), recouvrant partiellement la pièce (41), fixé sur l'extrémité libre du manchon (13).

2. Support selon la revendication 1, **caractérisé en ce que** le couvercle (17) est monté par encliquetage sur l'extrémité libre du manchon central (13) du boîtier (50).

3. Support selon la revendication 1 ou 2, **caractérisé en ce que** la partie centrale (10) présente une cheminée (14) d'orientation axiale faisant saillie vers l'extérieur pour montage par encliquetage d'une partie (51) surmoulée sur l'une des extrémités des moyens souples de liaison électrique (6).

4. Support selon l'une quelconque des revendications 1 à 3, **caractérisé en ce que** la pièce (41) de la partie mobile (40) porte une roue dentée (16) appartenant à un dispositif compteur de tours.

5. Support selon la revendication 4, **caractérisé en ce que** le couvercle (17) présente un ergot destiné à coopérer avec la roue dentée (16).

6. Support selon l'une quelconque des revendications 1 à 5, **caractérisé en ce qu'**il est en matière plastique moulable.

## Patentansprüche

1. Schaltergehäuse (1), das mit der Lenksäule (4) eines Kraftfahrzeugs verbunden ist, umfassend einen Mittelteil (10) für die Verbindung mit der besagten Lenksäule und die Anbringung eines Drehschalters (3),
der Drehschalters (3) besteht aus zwei koaxialen Teilen (10, 40), die im Verhältnis zueinander drehbeweglich entgegen biegsamen elektrischen Verbindungsmitteln (6) gelagert sind, und zwar:
a) ein ortsfesten Teil (10), bestehend haus dem Mittelteil, welches ein ringförmiges Gehäuse bildet, mit
- einem Boden (50),
- einer axial ausgerichteten Umfangsrandleiste, und
- eine mittigen Muffe (13),
b) ein mit der Lenksäule des Fahrzeugs verbundenes bewegliches Teil (40), bestehend aus einem ringförmigen Element (41),
dem Gehäuse und dem Element (41), das einen Hohlraums bildet in dem die biegsamen elektrischen Verbindungsmittel (6) eingeschlossen sind,
**dadurch gekennzeichnet, daß** das Element (41) einen axial ausgerichteten Teil umfaßt, welcher drehbar auf der mittigen Muffe (13) gelagert ist, dieser Muffe eine Nabe bildet, und daß das Schaltergehäuse einen Deckel (17) umfaßt, der das Element (41) teilweise abdeckt, und der an dem freien Ende der mittigen Muffe (13) angebracht ist.

2. Schaltergehäuse nach Anspruch 1, **dadurch gekennzeichnet, daß** der Deckel (17) durch Verrastung auf dem freien Ende der mittigen Muffe (13) des Gehäuses (50) angebracht ist.

3. Schaltergehäuse nach Anspruch 1 oder 2, **dadurch gekennzeichnet, daß** der Mittelteil (10) einen nach außen vorstehenden, axial ausgerichteten Schacht (14) für die mittels Verrastung erfolgende Anbringung eines Teils (51) aufweist, der auf einem der Enden der biegsamen elektrischen Verbindungsmittel (6) aufgeformt ist.

4. Schaltergehäuse nach Anspruch 3, **dadurch gekennzeichnet, daß** das Element (41) des beweglichen Teils (40) ein Zahnrad (16) trägt, das zu einer Umdrehungszählervorrichtung gehört.

5. Schaltergehäuse nach Anspruch 4, **dadurch gekennzeichnet, daß** der Deckel (17) einen Vorsprung aufweist, der für das Zusammenwirken mit dem Zahnrad (16) bestimmt ist.

6. Schaltergehäuse nach einem der Anspruche 1 bis 5, **dadurch gekennzeichnet, daß** es aus formbarem Kunststoff ausgeführt ist.

## Claims

1. A multi-switch carrier (1) associated with the steering column (4) of a motor vehicle, of the kind comprising a central portion (10) for connection with the said steering column and for mounting a rotary contactor (3),
that contactor (3) comprising two coaxial parts (10, 40) which are mounted for movement of one with respect to the other against the action of flexible electric connecting means (6), namely:
a) a fixed part (10), constituted by the central portion, forming an annular housing having
- a base portion (50),
- an axially orientated peripheral flange, and
- a central sleeve portion (13),
b) a movable part (40), associated with the steering wheel of the vehicle, comprising an annular element (41),
the housing and the element (41) defining a cavity within which the flexible electrical connecting means (6) are confined,
**characterised in that** the element (41) has an axially orientated portion which is mounted for rotation on the central sleeve portion (13) forming a hub, and **in that** the carrier comprises a cover piece (17), partially overlying the element (41), fixed on the free end of the central sleeve portion (13).

2. A carrier according to Claim 1, **characterised in that** the cover piece (17) is snap-fitted on the free end of the central sleeve portion (13) of the housing (50).

3. A carrier according to Claim 1 or 2, **characterised in that** the central portion (10) includes an axially orientated chimney (14) projecting outwardly for mounting, by snap-fitting, of an element (51) moulded on one of the ends of the flexible electrical connecting means (6).

4. A carrier according to any one of Claims 1 to 3, **characterised in that** the element (41) of the movable part (40) carries a toothed wheel (16) which is part of a revolution counting device.

5. A carrier according to Claim 4, **characterised in that** the cover piece (17) has a tooth for cooperation with the toothed wheel (16).

6. A carrier according to any one of Claims 1 to 5, **characterised in that** it is made of mouldable plastics material.
